(19) Europäisches Patentamt
European Patent Office
Office européen des brevets

(11) **EP 1 621 901 B1**

(12) **EUROPÄISCHE PATENTSCHRIFT**

(45) Veröffentlichungstag und Bekanntmachung des Hinweises auf die Patenterteilung:
**09.06.2010 Patentblatt 2010/23**

(51) Int Cl.:
*G01W 1/17* *(2006.01)*    *F24F 11/00* *(2006.01)*

(21) Anmeldenummer: **05016394.8**

(22) Anmeldetag: **28.07.2005**

(54) **Mess- und Warngerät**

Measuring and warning apparatus

Appareil de mesure et d'alarme

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **28.07.2004 DE 102004036578**

(43) Veröffentlichungstag der Anmeldung:
**01.02.2006 Patentblatt 2006/05**

(73) Patentinhaber:
• **Siegrist, Michael**
  **76139 Karlsruhe (DE)**
• **Siegrist, Alexandra**
  **76133 Karlsruhe (DE)**
• **Baréz, Klaus**
  **76228 Karlsruhe (DE)**
• **Schuster, Ralf**
  **76137 Karlsruhe (DE)**

(72) Erfinder: **Siegrist, Michael**
  **76139 Karlsruhe (DE)**

(74) Vertreter: **Geitz, Holger**
  **Geitz Truckenmüller Lucht**
  **Patentanwälte,**
  **Kriegsstrasse 234**
  **76135 Karlsruhe (DE)**

(56) Entgegenhaltungen:
  **EP-A- 0 455 509    EP-A- 0 592 796**
  **DE-A1- 3 300 389    DE-A1- 4 112 198**
  **DE-A1- 19 634 338    US-A1- 2005 156 746**

EP 1 621 901 B1

**Beschreibung**

Die Erfindung betrifft ein Mess- und Warngerät, insbesondere zur Schimmelpilzprävention in geschlossenen Räumen mit einer Sensorik zur Erfassung von wenigstens einer Raumlufttemperatur und einer Raumluftfeuchte, mit einer Anzeigevorrichtung zur Anzeige eines Alarms im Falle der überschreitung vordefinierter Grenzwerte, sowie einer Prozessoreinheit zur Signalverarbeitung und Gerätesteuerung.

Ein solches Gerät zum Messen der Klimawerte, insbesondere in Wohn-, Arbeits- und Schlafräumen, ist etwa aus der DE 33 00 389 A1 vorbekannt. Das Gerät besitzt Einrichtungen zum Messen der Lufttemperatur und Luftfeuchtigkeit und ist mit einem Mikroprozessor ausgestattet, der beim Erreichen von Grenzwerten Warnleuchten mit definierten Bedeutungen etwa Heizen, Lüften oder Kühlen an dem Gerät aufleuchten lässt. Das Gerät erschöpft sich aber mehr oder minder in einem Vergleich von Absolutwerten, der den komplexen in der Regel nicht linearen Vorgängen bei der Taupunktbildung und - berechnung allenfalls ansatzweise gerecht wird.

Der Taupunkt bezeichnet dabei die Lufttemperatur, die bei einem vorgegebenen Wassergehalt dazu führt, dass aus der Luft Tauwasser ausfällt. Die Taupunkttemperatur in einem vorgegebenen Klima von 20 Grad bei einer üblichen Raumluftfeuchte von 50 % liegt im Innenraum bei ca. 9,3 Grad.
In Wohnräumen ist demnach möglichst darauf zu achten, dass die Innenoberflächentemperatur eine Mindesttemperatur von 10 Grad nicht unterschreitet, um die erwähnte und unerwünschte Tauwasserbildung zu vermeiden oder aber dafür zu sorgen, dass etwa entstandenes Tauwasser schadensfrei verdunsten kann.

Die Problematik der Tauwasserbildung hat insbesondere aufgrund der daraus resultierenden Schimmelpilzbildung, mit dem für die menschliche Gesundheit nachteiligen Einflüssen der Schimmelpilzgifte und aufgrund von deren toxischer Wirkung, eine erhebliche Bedeutung erlangt. Das Problem ist dadurch verschärft worden, dass neue und alte Häuser heute zunehmend luftdicht ausgestattet werden, um den Anforderungen der neuen Wärmeschutzverordnungen gerecht zu werden, die insbesondere deshalb erlassen wurden, um die $CO_2$-Emission zu reduzieren. Die Beschlagbildung innerhalb eines Wohnraums ist stets ein Indiz für das Zusammentreffen von mehreren Faktoren, nämlich der Lufttemperatur außen, der Lufttemperatur innen, dem K-Wert des jeweiligen Bauelements und der relativen Luftfeuchte des jeweiligen Raums. Die etwaige Bildung von Tauwasser im Innenraum ist also nicht nur das Ergebnis des Zusammenwirkens von Raumfeuchte und Raumtemperatur, sondern vielmehr auch der gebäudeimmanenten Gegebenheiten. Dies wird beispielsweise schon dadurch deutlich, dass aufgrund der unterschiedlichen K-Werten in erster Linie Taubildung im Bereich der relativ kälteren Oberflächen erfolgt.

Auch darf das Überschreiten des Taupunktes nicht gleich mit Schimmelpilzbildung gleichgesetzt werden, denn auch bei der zum Teil unvermeidbaren der Tauwasserbildung ist nur dann eine Schimmelpilzbildung zu befürchten, wenn das niedergeschlagene Tauwasser nicht schadensfrei verdunsten kann. Bei normalem Lüftungsverhalten und unter normalen Umgebungsbedingungen, also einer Raumtemperatur von 20 bis 22 Grad bei einer durchschnittlichen relativen Raumluftfeuchte kleiner als 50 bis 55 % ist bei sachgemäßer Bausführung mit Schimmelpilzbildung eher nicht zu rechnen. Im Übrigen ist noch darauf hinzuweisen, dass die Schimmelpilzbildung unter anderem auch eine Konsequenz mangelnder Raumreinigung sein kann, da Staub üblicherweise von feuchten Untergründen gebunden wird und dieser feuchte Staub wiederum einen idealen Nährboden für Schimmelpilze darstellt. Insbesondere im Bereich von Fensterrahmen kann dies durch entsprechend kräftigen Lichteinfall verstärkt werden.

Insbesondere im Zusammenhang mit den im Neubaubereich heute häufig üblichen Niedrigenergiehäusern oder Fassivhäusern, die sich durch eine sehr hohe fast vollständige Luftdichtheit der eingesetzten Baustoffe und eine nahezu perfekte Wärmedämmung auszeichnen, besteht bei mangelnder Lüftung das Problem des Tauwasserniederschlags, das vielerorts durch Maßnahmen der Zwangsbelüftung bekämpft werden soll. Unter einer Zwangsbelüftung ist eine Sensorik zu verstehen, die wiederum Raumfeuchte und Raumtemperatur misst und dann mittels einer Aktorik aktive oder passive Lüftungselemente zum Zwecke der Belüftung des Raums einsetzt, um bei Überschreitung des Taupunkts für eine ausreichende Lüftung zu sorgen. wie bereits erwähnt, können bei entsprechend normalen Lüftungsverhalten diese relativ kostenintensiven Maßnahmen der Zwangsbelüftung vollständig entfallen. Folglich kann in einem derartigen Fall auch die ansonsten erforderliche gesamte kostenintensive Aktorik entfallen.

Es versteht sich, dass die Akzeptanz dieser Geräte sowohl mit deren Bedienfreundlichkeit, aber auch mit deren Zuverlässigkeit steht und fällt. Das vorbekannte Gerät lässt jedoch völlig unberücksichtigt, dass die Raumluftfeuchte und Raumlufttemperatur noch keine zuverlässige Bestimmung des raumspezifischen Taupunktes zulässt, da die jeweiligen Gebäudedaten, also sprich die jeweils eingesetzte Wärmedämmung, die Anzahl der gegebenenfalls freistehenden Außenwände und die Größe der vorhandenen Fensterflächen, also der Mix, der den Raum gegenüber der Umgebung abschließenden K-Werte entscheidend für die im Raum auch noch lokal unterschiedlichen Taupunkte ist.

Die aus dem Stand der Technik bekannte Anzeigevorrichtung stellt somit zwar ein wertvolles Hilfsmittel für den Verbraucher zur Verbesserung seines Lüftungsverhaltens dar, wobei der Wert dieses Hilfsmittels dadurch begrenzt ist, dass es mehr oder minder dem Zufall überlassen bleibt, ob die angezeigten Alarme auch mit der jeweils vor Ort vorhandenen Bauphysik in Einklangstehen. Das Gerät muss also entweder derart kalibriert sein, dass es die Grenzwerte derart niedrig ansetzt, dass quasi in jedem Falle ein ausreichendes Lüftungsverhalten sichergestellt ist, mit der Folge, dass häufig bereits bei völlig unkritischen Werten Alarm gegeben wird und gelüftet werden muss. Sobald der Verbraucher dies feststellt, wird er zunehmend sein Lüftungsverhalten wieder weitgehend unabhängig von der jeweiligen Gerateanzeige gestalten. Selbstverständlich gilt dies erst recht für den Fall, dass die Grenzwerte höher eingestellt werden und die Schimmelpilzbildung auch dann eintritt, wenn das Lüftungsverhalten auf die angezeigten Alarme abgestimmt war.

Ausgehend von diesem Stand der Technik liegt der Erfindung die Aufgabe zugrunde, ein verbessertes Mess- und Warngerät zur Schimmelprävention zu schaffen, das dem Kunden eine verbesserte Anzeigegenauigkeit und einen erhöhten Bedienkomfort bietet.

Die erfindungsgemäße Aufgabe wird durch ein Mess- und Warngerät gemäß Hauptanspruch gelöst. Vorteilhafte Ausgestaltungen sind den abhängigen Ansprüchen 2 bis 16 zu entnehmen.

Dadurch, dass das Mess- und Warngerät über den Stand der Technik hinaus mit einem Datenspeicher versehen ist, in dem die raum- und/oder gebäudespezifisehen Daten des zu überwachenden Raums im Wege der Kalibrierung angelegt sind und diese Daten mit den erfassten Absolutmesswerten derart in Beziehung gesetzt werden, dass diese zu Relativmesswerten umgesetzt werden und erst aufgrund dieser Relativmesswerte eine Alarmanzeige erfolgt, ist sichergestellt, dass die Alarmanzeige durch die Berücksichtigung der lokalen Gegebenheiten vor Ort deutlich verbessert und genauer ist.

Selbstverständlich kann eine derart individuelle Raumkalibrierung im herkömmlichen Haushalts- und Privatbereich schon aus Kostengründen nicht erfolgen- Die Zuverlässigkeit und Genauigkeit der angezeigten Alarme ist jedoch schon dann wesentlich verbessert, wenn zumindest wesentliche Bauunterschiede, wie etwa die Unterscheidung zwischen Alt- und Neubauten bzw. zwischen alleinstehenden Häusern und Reihenhäusern oder Geschosswohnungen, im Wege der Vorkalibrierung angelegt sind und dann die entsprechend spezifizierten Mess- und Warngeräte an den richtigen Einsatzorten zum Einsatz gelangen. Die Beschränkung auf einige wenige Kennlinien ermöglicht es, dass das erfindungsgemäße Mess- und Warngerät ausgesprochen kostengünstig und zur individuellen Nachrüstung mehr oder minder jedem Privathaushalt anbieten zu können.

Die Berechnung des Taupunktes erfolgt dabei gemäß an sich bekannter Gesetzmäßigkeiten gemäß der in Anspruch 3 angegebenen Formel. Gemäß Anspruch 4 können weitere Anpassungen vorgenommen werden.

Im Ergebnis werden durch die Berechnungen sogenannte kritische Ereignisse erkannt. Bevor es jedoch zur Auslösung eines Alarms kommt, wird zunächst eine Tendenz ermittelt also festgestellt, ob ein kritisches Ereignis ein Ausreißer war oder sich der Trend zur Kondenswasserbildung bestätigt. Erst wenn das der Fall ist, wird Alarm gegeben. Auch dies stellt einen erheblichen Beitrag zur Vermeidung von Fehlalarmen und unnötigen Aktionismus dar. Heizen und Lüften sind beides Maßnahmen die nicht im fliegenden Wechsel sondern kontinuierlich erfolgen sollten. Dass Messgerät trägt dem durch die vorstehend erläuterte Tendenzbildung und -auswertung Rechnung.

In besonders einfacher Ausgestaltung genügt es selbstverständlich, wenn das Gerät ausschließlich mit einer Alarmanzeige verbunden ist.

Der Verbraucher muss dann lediglich im Falle der Alarmanzeige nach Möglichkeit lüften. Nachdem jedoch mit dem Gerät in an sich bekannter weise die jeweilige Raumtemperatur und Raumfeuchte gemessen wird, liegt es nahe, diese Werte auch auf der Anzeigevorrichtung zur Anzeige zu bringen. Die entsprechende Anzeige fördert darüber hinaus das Vertrauen des Benutzers in das Gerät, da die Korrektheit der angezeigten Daten ein Indiz dafür darstellen, dass auch die angezeigten Alarme zutreffend sind.

Das Gerät wird üblicherweise mit einer herkömmlichen LCD-Anzeige versehen sein, so dass es aus Kostengründen sinnvoll sein kann, zwischen den angezeigten Werten hin und her schalten zu können, um die Anzeige und das Gerät insgesamt entsprechend klein und platzsparend ausführen zu können.

Selbstverständlich können im Rahmen der Erfindung auch weitere Werte auf der Anzeigevorrichtung zur Anzeige gebracht werden, wie etwa die im Rahmen der Signalverarbeitung ermittelten Relativmesswerte oder anderes.

Ein weiterer Vorteil der Anzeige der gemessenen Raumtemperatur und/oder Raumfeuchte besteht darin, dass der Verbraucher unmittelbar den Erfolg seiner Lüftungsbemühungen an der veränderten Anzeige ablesen kann.

In vorteilhafter Ausgestaltung beschränkt sich das Gerät nicht auf eine digitalen Alarmanzeige, sondern gibt einen gestuften Alarm, beispielsweise in Form einer Ampelschaltung. So kann die Alarmanzeige mit einem grünen Licht die Betriebsbereitschaft des Gerätes anzeigen, sowie, dass die aktuell gemessenen Relativmesswerte innerhalb der vorgegebenen Grenzwerte liegen. Durch eine gelbe Anzeige können etwaige bevorstehende Betriebsstörungen, wie etwa, dass die Batteriespannungsversorgung langsam abfällt, angezeigt werden. Durch rotes Licht kann das momentane Überschreiten der vordefinierten Grenzwerte angezeigt werden und schließlich durch ein zusätzliches Blinklicht, dass nun ein sofortiges Handeln, sprich Lüften, angezeigt ist.

Selbstverständlich kann nicht unbedingt davon ausgegangen werden, dass die Geräte in allen zu kontrollierenden Räumen angebracht werden und schließlich kann nicht sichergestellt werden, dass eine optische Anzeige jederzeit im Blickfeld des Benutzers liegt. Daher erscheint es sinnvoll, die optische Anzeige durch eine akustische Anzeige zu ergänzen, wobei der akustische Signalgeber, insbesondere im Falle des Eintritts von definierten Alarmzuständen, anspringen sollte.

Insbesondere im Bereich der Vermietung von Wohnungen oder Häusern ist es im Falle der Schimmelpilzbildung oftmals umstritten, ob die Schimmelpilzbildung kausal auf Baumängel oder auf mangelndes Lüftungsverhalten des Mieters zurückzuführen sind. Um derartige Streitigkeiten zu vermeiden und um eine klare Beweislage zu schaffen, erscheint es daher ratsam, das erfindungsgemäße Mess- und Warngerät derart weiterzubilden, dass die angezeigten Alarme mittels einer entsprechenden Quittungstaste vom Benutzer quittiert werden müssen. Dies kann beispielsweise dadurch sichergestellt werden, dass das akustische Signal erst dann abgestellt ist, wenn die Quittungstaste getätigt wurde. Das Quittierverhalten des Mieters kann dann von dem Mess- und Warngerät protokolliert werden.

In diesem Zusammenhang hat es sich als vorteilhaft erwiesen, wenn dem Mess- und Warngerät zusätzlich eine Systemuhr zugeordnet ist bzw. die in dem Mess- und Warngerät integrierte Systemuhr der Prozessoreinheit dazu genutzt wird, dass die akustische Alarmanzeige nur zu festgegebenen Tageszeiten erfolgt und auch nur zu diesen quittiert werden muss. Um dies zu ermöglichen, kann es erforderlich sein, dass eine etwaige Alarmanzeige zunächst in einem Speicher vorgehalten wird und die Alarmanzeige, insbesondere die akustische Alarmanzeige erst dann erfolgen, wenn der hierfür zulässige Tagesabschnitt erreicht ist.

In abermals vorteilhafter Ausgestaltung beschränkt sich die Signalverarbeitung nicht darauf, dass ein überschreiten der als kritisch empfundenen Grenzwerte erkannt und angezeigt wird. Vielmehr ist es im Rahmen einer intelligenten Signalverarbeitung ratsam, der Signalverarbeitung eine Zeitfunktion derart zuzuordnen, dass hinsichtlich des Überschreitens von Grenzwerten zunächst der Gradient der Relativmesswerte und somit eine Tendenz der Werte derart ermittelt wird, dass beispielsweise ein kurzfristiges Überschreiten des Grenzwerts nicht zu einer sofortigen Alarmanzeige führt. Das mit einer entsprechend intelligenten Signalverarbeitung ausgestattete Mess- und Warngerät kann also aufgrund der im Wege der Signalverarbeitung festgestellten Tendenzen und Gradienten erkennen, ob nur ein lokales Hoch bzw. Tief der erfassten Relativmesswerte vorliegt oder ob eine dauerhafte Überschreitung der Grenzwerte zu befürchten ist, so dass eine Signalanzeige an den Benutzer angezeigt ist.

Darüber hinaus kann im Rahmen der intelligenten Signalverarbeitung zwischen kritischen und unkritischen Zeiten unterschieden werden. Als kritische Zeit sind sogenannte "Tauzeiten" anzusehen, während unkritische Zeiten "Verdunstungsperioden" sind. Dabei können sich kritische und unkritische Zeiten ausgleichen bzw. die Alarmgabe fördern oder hemmen. Das System berücksichtigt also die Tauseit als alarmsteigernd und Verdunstungsperioden als alarmhemmend. Erst nach Auswertung der alarmfördernden und alarmhemmenden Zeitabschnitte erfolgt die Alarmanzeige oder unterbleibt eben.

Zusätzlich können bei der Bewertung der Messergebnisse auch weitere Kennlinien und Gesetzmäßigkeiten, etwa biologische Erkenntnisse des Schimmelpilzwachstums berücksichtigt werden und bei der Klassifikation ob es sich um eine kritische oder unkritische Zeit gehandelt hat, einfließen.

In abermals vorteilhafter Ausgestaltung hat es sich als hilfreich erwiesen, wenn dem Gerät eine Kalenderfunktion derart zugeordnet ist, dass zwischen einem Sommer- und einem Winterbetrieb unterschieden wird. üblicherweise müssen Sommerzeiten für die Frage der Lüftungsproblematik als unkritisch bezeichnet werden, so dass beispielsweise im Sommerbetrieb mit erhöhten Grenzwerten gearbeitet werden kann.

In weiterer Ausgestaltung ist dem erfindungsgemäßen Gerät ein Datenlogger zugeordnet, der zumindest die aufgezeichneten Absolutmesswerte und/oder Alarmzustande aufzeichnet. Selbstverständlich können auch weitere im Rahmen des Geratebetriebs anfallende Betriebszustände, wie beispielsweise der Empfang der vom Benutzer gegebenen Quittungssignale aufgezeichnet und einer späteren Auswertung zugeführt werden.

Die in dem Mess- und Warngerät integrierte Sensorik arbeitet mit einem an sich herkömmlichen Kombisensor für Feuchte und Temperatur.

Die Sensorik umfasst eine hydrophobe Membran, die im Strömungsweg der das Gerät durchziehenden Raumluft angeordnet ist. Hierzu ist das, vorzugsweise aus EVM-verträglichen Kunststoff hergestellte, Gehäuse mit entsprechenden Lüftungssehlitzen versehen.

Das Mess- und Warngerät kann in vorteilhafter Ausgestaltung als kompakte Unterputz- und/oder Aufputzdose entweder mit eigener Batterieversorgung oder als Steckdoseneinsatz gestaltet sein.

Dadurch, dass der hydrophoben Membran eine Sensorik von seriellen CMOS-Sensoren zur Erfassung der Raumtemperatur und Raumfeuchte zugeordnet sind, ist es aufgrund der Verwendung einer seriellen Sensorik möglich, dass einzelne Sensoren ausgetauscht werden können, ohne dass abschließend eine Kalibrierung des Gesamtsystems erforderlich ist.

Die Erfindung wird nachstehend anhand eines in der Zeichnung nur schematisch dargestellten Ausführungsbeispiels näher erläutert.

Es zeigen:

Fig. 1: eine Frontansicht eines Mess- und Warngeräts,

Fig. 2: ein Blockschaltbild des in Fig. 1 dargestellten Mess- und Warngeräts.

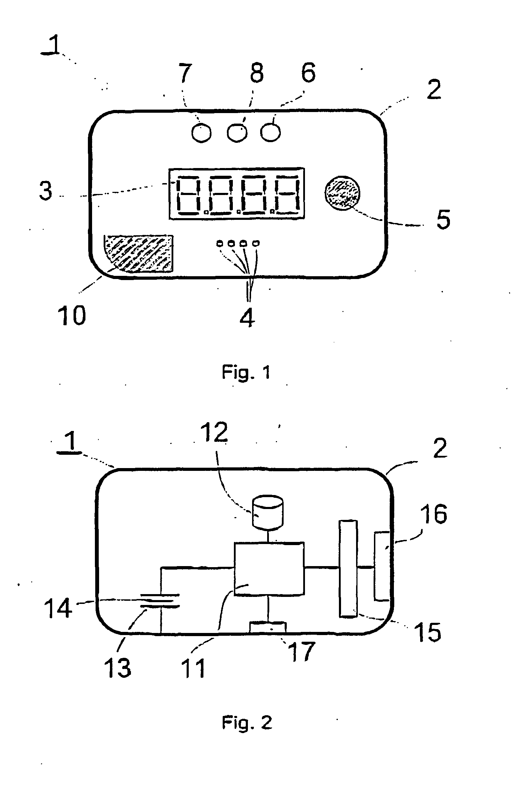

Das in Figur 1 nur schematisch dargestellte Mess- und Warngerät 1 besteht zunächst im Wesentlichen aus einem EVM-verträglichen Kunststoffgehäuse 2, das üblicherweise als kompakte Unterputz- oder Aufputzdose ausgearbeitet ist. Zusätzlich kann das Gehäuse 2 als Steckdoseneinsatz ausgebildet sein. Hierzu muss in das Mess- und Warngerät 1 ein an sich herkömmliches Netzteil integriert sein, das in Figur 1 nicht weiter dargestellt ist.

Das Mess- und Warngerät 1 ist mit einer Anzeigevorrichtung versehen, die im Wesentlichen aus einer LCD-Anzeige 3 sowie eine LED-Anzeige 4 besteht, die drei LED's umfasst. Die LED's sind vorzugsweise in den Farben Grün, Gelb und Rot im Gehäuse 2 angeordnet.

Ein weiterer Teil der Anzeigevorrichtung ist der akustische Signalgeber 5. Zusätzlich weist das Mess- und Warngerät 1 eine Bedienvorrichtung 6 auf, die mehrere Tasten umfasst, wobei insbesondere auf eine Quittungstaste 7 und eine Umschalttaste 8 hinzuweisen ist. Das Gehäuse 2 ist darüber hinaus mit einer Reihe von Lüftungsschlitzen 10 versehen und wird dementsprechend von der Umgebungsluft des Raums umströmt.

Der Aufbau des in Figur 1 darstellten Mess- und Warngeräts 1 kann im Wesentlichen dem in Figur 2 gezeigten Blockschaltbild entnommen werden. Gemäß der Darstellung in Figur 2 umfasst das Mess- und Warngerät zunächst eine Prozessoreinheit 11, der ein Datenspeicher 12 zugeordnet ist. Die Prozessoreinheit 11 steht überdies mit einem CMOS-Sensor 13 in Datenverbindung, der einer hydrophoben Membran 14 zugeordnet ist, die im Strömungsweg der durch die Lüftungsschlitze 10 eindringenden Umgebungsluft angeordnet ist. An die Prozessoreinheit 11 ist darüber hinaus ein Datenlogger 15 mit einer Ein- und Ausgabeeinheit 16 zum Anschluss nicht weiter dargestellter Datenverarbeitungsgeräte versehen. Ferner ist sowohl der Datenspeicher 12, wie auch die Prozessoreinheit 11 über ein Interface 17 kalibrierbar bzw. mit einer externen Schreib- und Lese-Einheit verbindbar.

Nachstehend wird die Funktion des vorstehend beschriebenen Mess- und Warngerätes 1 näher erläutert:

Der CMOS-Sensor 13 stellt einen kombinierten Temperatur- und Feuchtemesser dar, über den die momentane Raumlufttemperatur und Raumfeuchte ermittelt und an die Prozessoreinheit 11 übermittelt wird. Die Prozessoreinheit 11 setzt die von dem CMOS-Sensor 13 empfangenen absoluten Messwerte unter Berücksichtigung der in dem Datenspeicher 12 abgelegten bauspezifischen Kalibrierungsdaten in Relativmesswerte um und vergleicht diese anhand vorgegebener Kennlinien und den ebenfalls in dem Datenspeicher abgelegten Grenzwerten. Dabei wird beim Vergleich der relativen Messwerten mit den vorgegebenen Grenzwerten sowohl eine Zeitschiene berücksichtigt, d.h. es werden kritische und unkritische Zeiten alarmsteigernd bzw. alarmhemmend berücksichtigt. Ferner wird unterschieden, ob sich das Mess- und Warngerät 1 im Sommer- oder Winterbetrieb befindet. Schließlich erfolgt eine Gradientenauswertung dahingehend, dass erkannt wird, ob nur eine momentane oder eine dauerhafte Überschreitung von Grenzwerten vorliegt. In Abhängigkeit von dieser intelligenten Signalverarbeitung wird dann bestimmt, ob die LED-Anzeige 4, die gestufte Alarmanzeige oder gar kein Alarm ausgegeben wird. Beim Überschreiten definierter Grenzwerte ist zusätzlich eine akustisches Signalgabe möglich, die dann vom Benutzer über die Quittiertaste 7 quittiert werden muss. Erst nach Quittieren des Alarmsignals wird der akustische Alarm abgeschaltet.

Die absoluten Messwerte sowie die Alarmzustände werden über den Datenlogger 15 zusätzlich aufgezeichnet und können über eine Ein- und Ausgabeeinheit 16 bedarfsweise abgefragt werden. Etwaige Software-Updates oder Nachkalibrierungen können über das Interface 17 vorgenommen werden.

Vorstehend ist somit ein kompaktes Mess- und Warngerät 1 beschrieben, das den Verbraucher zuverlässig über sein Raumklima und gegebenenfalls sein Lüftungsverhalten unter Berücksichtigung der jeweiligen Raumspezifika unterrichtet.

**BEZUGSZEICHENLISTE**

1    Mess- und Warngerät
2    Gehäuse
3    LCD-Anzeige
4    LED-Anzeige
5    Akustischer Signalgeber
6    Bedieneinrichtung
7    Quittiertaste
8    Umschalttaste
10   Lüftungsschlitz
11   Prozessoreinheit
12   Datenspeicher
13   CMOS-Sensor
14   Hydrophobe Membran
15   Datenlogger
16   Ein- und Ausgabeeinrichtung

17    Interface

**Patentansprüche**

1. Mess- und Warngerät, insbesondere zur Schimmelpilzprävention in geschlossenen Räumen, mit einer Sensorik zur Erfassung von wenigstens einer aktuellen Raumlufttemperatur und einer aktuellen Raumluftfeuchte, mit einer Anzeigevorrichtung zur Anzeige eines Alarms im Falle der Überschreitung vordefinierter Grenzwerte, sowie einer Prozessoreinheit (11) zur Signalverarbeitung und Gerätesteuerung,
**dadurch gekennzeichnet,**
**dass** der Prozessoreinheit (11) ein Datenspeicher (12) zugeordnet ist, wobei in diesem Datenspeicher (12) im Wege der Kalibrierung zumindest raum-, und/oder gebäudespezifische Daten abgelegt sind und die mittels der Sensorik erfassten Werte, insbesondere der aktuellen Raumtemperatur und aktuellen Raumluftfeuchte, vorzugsweise mittels in dem Datenspeicher (12) abgelegter geeigneter Kennlinien, derart mit den gespeicherten Daten in Bezug gesetzt sind, dass die von der Sensorik erfassten Absolutmesswerte in bezogene Relativmesswerte umgesetzt sind und der weiteren Signalverarbeitung zugeführt werden und im weiteren die Anzeige des Alarms in Abhängigkeit des Überschreitens definierter Grenzwerte für diese Relativmesswerte erfolgt.

2. Mess- und Warngerät nach Anspruch 1, **dadurch gekennzeichnet, dass** die raum- und/oder gebäudespezifischen Daten derart stark extrapoliert sind, dass nur einige wenige Kennlinientypen, etwa für Neu- und Altbauten, angelegt sind, wobei diese vorzugsweise werkseitig vergebbar sind.

3. Mess- und Warngerät nach Anspruch 2, **dadurch gekennzeichnet, dass** die Raumlufttemperatur (RT) und die Raumluftfeuchte (RF) gemessen und um eine gebäudespezifischen Faktor (G) korrigiert werden, um dann den Taupunkt (TP) nach der Formel

$$TP = ((0,66077 - \log10(EW\_RF)) \times 237,3)$$

zu berechnen, wobei folgendes gilt:

TP = Taupunkt
RT = aktuelle gemessene Raumtemperatur
RF = aktuell gemessene Raumluftfeuchte
G = gebäudespezifischer Faktor
und sich
EW = Sättigungsdampfdruck über Wasser,

wobei gilt:

$$EW = 10^{\wedge}((0,660077 + (7,5 \times RT/(237,3 + RT)))$$

und

$$EW\_RF = EW \times RF/100$$

4. Mess- und Warngerät nach Anspruch 3, **dadurch gekennzeichnet, dass** die Raumlufttemperatur (RT) durch den gebäudespezifischen Faktor korrigiert wird und/oder der Taupunkt TP durch einen Sicherheitsfaktor, vorzugsweise gemäß DIN 4108, korrigiert wird.

5. Mess- und Warngerät nach Anspruch 4, **dadurch gekennzeichnet, dass** der korrigierte Taupunkt mit der korrigierten Raumlufttemperatur verglichen wird und falls die korrigierte Raumlufttemperatur < korrigierte Taupunkt wird ein kritisches Ereignis im Datenspeicher (12) gespeichert wird.

6.  Mess- und Warngerät nach Anspruch 5, **dadurch gekennzeichnet, dass** wenn innerhalb einer vorgegebenen Zeit einen vorgegebene Anzahl kritischer Ereignisse erreicht oder überschritten wird, eine Alarmanzeige - optisch und/ oder akustisch - generiert wird.

7.  Mess- und Warngerät nach einem der vorhergehenden Ansprüche, **dadurch gekennzeichnet, dass** mittels der Anzeigevorrichtung zusätzlich zu der Alarmanzeige, die jeweils gemessenen Absolutmesswerte, insbesondere der Raumlufttemperatur und/oder Raumluftfeuchte, gegebenenfalls umschaltbar, anzeigbar sind.

8.  Mess- und Warngerät nach Anspruch 7, **dadurch gekennzeichnet, dass** die Alarmanzeige der Anzeigevorrichtung, vorzugsweise mittels wenigstens dreier farbunterschiedlicher LED's (4) in unterscheidbare Alarmzustände gestuft, vorzugsweise gemäß einer Ampelschaltung, realisiert ist.

9.  Mess- und Warngerät nach Anspruch B, **dadurch gekennzeichnet, dass** der Anzeigevorrichtung zusätzlich ein akustischer Signalgeber (5) zugeordnet ist, der selbsttätig bei definierten Alarmzuständen einschaltbar ist.

10. Mess- und Warngerät nach Anspruch 9, **dadurch gekennzeichnet, dass** definierte Alarmzustände derart ausgestaltet sind, dass sie vorzugsweise durch Betätigung einer Quittiertaste (7) des Mess- und Warngerätes (1) quittiert werden müssen und erst nach der Quittierung die selbsttätige Abschaltung des akustischen Signals möglich ist.

11. Mess- und Warngerät nach einem der vorhergehenden Ansprüche, **dadurch gekennzeichnet, dass** in das Mess-und Warngerät (1), insbesondere in die Prozessoreinheit(11), eine Systemuhr integriert ist und der akustische Signalgeber ausschließlich zu definierten Zeitabschnitten, vorzugsweise Tageszeitabschnitten, einschaltbar ist, mithin gegebenenfalls die akustische Signalabgabe zeitversetzt erfolg.

12. Mess- und Warngerät nach einem der vorhergehenden Ansprüche, **dadurch gekennzeichnet, dass** der Signalverarbeitung des Mess- und Warngerätes (1) eine Zeitfunktion derart zugeordnet ist, dass kritische Zeiten, vorzugsweise Tauperioden, von unkritischen Zeiten, vorzugsweise Verdunstungsperioden, unterscheidbar sind und diese Zeitabschnitte im Rahmen der Signalverarbeitung alarmsteigernd oder alarmhemmend berücksichtigt sind.

13. Mess- und Warngerät nach Anspruch 12, **dadurch gekennzeichnet**, in dem Datenspeicher (12) zusätzlich eine Kennlinie der biologischen Gesetzmäßigkeiten des Schimmelpilzwachstums abgelegt ist, und diese Kennlininie zur Klassifikation kritische oder unkritische Zeit berücksichtigt wird.

14. Mess- und Warngerät nach Anspruch 12 oder 13, **dadurch gekennzeichnet, dass** der Prozessoreinheit (11) eine Kalenderfunktion zugeordnet ist, so dass hinsichtlich der mittels der Sensorik erfassten Absolutmesswerte zwischen einem Sommer- und einem Winterbetrieb des Mess- und Warngerätes (1) unterschieden wird.

15. Mess- und Warngerät nach einem der vorhergehenden Ansprüche, **dadurch gekennzeichnet, dass** die Sensorik mit Kombi-Sensoren für Feuchte und Temperatur versehen sind.

16. Mess- und Warngerät nach einem der vorhergehenden Ansprüche, **dadurch gekennzeichnet, dass** die geräte-in-terne Sensorik eine hydrophobe Membran (14) umfasst, die im Strömungsweg der das Mess- und Warngerät (1) durchströmenden Raumluft angeordnet ist, wobei das Gehäuse (2) des Mess- und Warngerätes (1), vorzugsweise ein EMV-verträgliches Kunststoffgehäuse, hierzu mit entsprechenden Lüftungsschlitzen (10) versehen ist, wobei der der hydrophoben Membran (14) der geräteinternen Sensorik vorzugsweise ein oder mehrere CMOS-Sensoren (13) zur simultanen Erfassung der Raumtemperatur und Raumfeuchte zugeordnet ist/sind.

**Claims**

1.  A measuring and warning device, in particular for mold prevention in enclosed spaces, having a sensor system for acquiring at least one current room air temperature and one current room ambient humidity, having a display device for displaying an alarm in the case that predefined limiting values are exceeded, and a processor unit (11) for signal processing and device control,

    **characterized in that** a data memory (12) is associated with the processor unit (11), at least room-specific and/or building-specific data being stored in this data memory (12) by means of a calibration, and the values acquired using the sensor system, in particular the current room temperature and the current room ambient humidity, preferably being related to the stored data using suitable characteristic curves stored in the data memory (12) in such a way that the absolute measured values acquired by the sensor system are converted into related relative measured values and supplied to further signal processing and, moreover, the display of the alarm is performed as a function of the exceeding of defined limiting values for these relative measured values.

2.  The measuring and warning device according to Claim 1, **characterized in that** the room-specific and/or building-specific data are strongly extrapolated in such a way that only a few characteristic curve types, for example for new buildings and old buildings, are applied, these types preferably being predefinable at the factory.

3.  The measuring and warning device according to Claim 2, **characterized in that** the room air temperature (RT) and the room ambient humidity (RF) are measured and corrected by a building-specific factor (G), in order to then calculate the dewpoint (TP) according to the formula

$$TP = ((0.66077 - \log 10 \, (EW\_RF)) \times 237.3),$$

the following applying:

    TP = dewpoint
    RT = current measured room temperature
    RF = current measured room ambient humidity
    G = building-specific factor
    and
    EW = saturation vapor pressure over water,

with:

$$EW = 10^- \, ((0.660077 + (7.5 \times RT/237.3 + RT)))$$

and

$$EW\_RF = EW \times RF/100.$$

4.  The measuring and warning device according to Claim 3, **characterized in that** the room air temperature (RT) is corrected by the building-specific factor and/or the dewpoint TP is corrected by a safety factor, preferably according to DIN 4108.

5.  The measuring and warning device according to Claim 4, **characterized in that** the corrected dewpoint is compared to the corrected room air temperature and if the corrected room air temperature is less than the corrected dewpoint, a critical event is stored in the data memory (12).

6.  The measuring and warning device according to Claim 5, **characterized in that** if a predetermined number of critical events is reached or exceeded within a predetermined time, a - visual and/or acoustic - alarm display is generated.

7.  The measuring and warning device according to one of the preceding claims, **characterized in that** in addition to the alarm display, the measured absolute measured values, in particular the room air temperature and/or room ambient humidity, each are displayable using the display device, and can optionally be changed over.

8.  The measuring and warning device according to Claim 7, **characterized in that** the alarm display of the display device is implemented as stepped in differentiable alarm states, preferably using at least three LEDs (4) of different colors, preferably according to a traffic signal circuit.

9.  The measuring and warning device according to Claim 8, **characterized in that** an acoustic signal generator (5) is additionally associated with the display device, which can be turned on automatically in the case of defined alarm states.

10. The measuring and warning device according to Claim 9, **characterized in that** defined alarm states are designed in such a way that they must be acknowledged preferably by actuating an acknowledge button (7) of the measuring and warning device (1) and the automatic shutdown of the acoustic signal is only possible after the acknowledgment.

11. The measuring and warning device according to one of the preceding claims, **characterized in that** a system clock is integrated in the measuring and warning device (1), in particular in the processor unit (11), and the acoustic signal generator can exclusively be turned on at defined time slots, preferably time-of-day slots, and therefore the acoustic signal output may occur with a time delay.

12. The measuring and warning device according to one of the preceding claims, **characterized in that** a time function is associated with the signal processing of the measuring and warning device (1) in such a way that critical times, preferably periods of dew, can be differentiated from noncritical times, preferably periods of evaporation, and these time slots are taken into consideration to increase alarms or inhibit alarms in the context of the signal processing.

13. The measuring and warning device according to Claim 12, **characterized in that** a characteristic curve of the biological laws of the mold growth is additionally stored in the data memory (12), and this characteristic curve is taken into consideration for the classification of critical or noncritical times.

14. The measuring and warning device according to Claim 12 or 13, **characterized in that** a calendar function is associated with the processor unit (11), so that a differentiation can be made between summer and winter operation of the measuring and warning device (1) in regard to the absolute measured values acquired using the sensor system.

15. The measuring and warning device according to one of the preceding claims, **characterized in that** the sensor system is provided with multipurpose sensors for humidity and temperature.

16. The measuring and warning device according to one of the preceding claims, **characterized in that** the internal-device sensor system comprises a hydrophobic diaphragm (14), which is situated in the flow path of the room air flowing through the measuring and warning device (1), the housing (2) of the measuring and warning device (1), preferably an EMC-compatible plastic housing, being provided with corresponding ventilation slots (10) for this purpose, one or more CMOS sensors (13) preferably being associated with the hydrophobic diaphragm (14) of the internal-device sensor system for simultaneous acquisition of the room temperature and room humidity.

**Revendications**

1. Appareil de mesure et d'avertissement, en particulier pour la prévention des moisissures dans les locaux fermés, avec un système de capteur pour la détection d'au moins une température de l'air ambiant actuelle et d'une humidité de l'air ambiant actuelle, avec un dispositif d'affichage pour l'affichage d'une alarme en cas de dépassement de limites prédéfinies, et avec une unité de processeur (11) pour le traitement des signaux et la commande d'appareils, **caractérisé en ce qu'** une mémoire de données (12) est associée à l'unité de processeur (11), laquelle mémoire de données (12) comportant au cours de l'étalonnage des données au moins spécifiques du local et/ou du bâtiment et les valeurs captées par le système de capteurs, en particulier de température ambiante actuelle et d'humidité ambiante actuelle, sont mises en relation avec les données enregistrées, de préférence au moyen de courbes caractéristiques appropriées enregistrées dans la mémoire de données (12), de telle façon que les valeurs de mesure absolues captées par le système de capteurs soient converties en valeurs de mesure relatives et transmises à la suite du traitement des signaux et que l'affichage de l'alarme ait lieu en outre en fonction du dépassement de limites définies pour ces valeurs de mesure relatives.

2. Appareil de mesure et d'avertissement selon la revendication 1, **caractérisé en ce que** les données spécifiques du local et/ou du bâtiment sont fortement extrapolées de telle façon que seuls quelques types de courbes caractéristiques, par exemple pour les bâtiments nouveaux et anciens, soient créés, ceux-ci pouvant de préférence être attribués en usine.

3. Appareil de mesure et d'avertissement selon la revendication 2, **caractérisé en ce que** la température de l'air ambiant (RT) et l'humidité de l'air ambiant (RF) sont mesurées et corrigées avec un facteur spécifique du bâtiment (G) pour calculer le point de rosée (TP) selon la formule

$$TP = ((0,66077 - \log 10(EW\_RF)) \times 237,3)$$

où :

TP = point de rosée,
RT = température ambiante actuelle mesurée,
RF = humidité de l'air ambiant actuelle mesurée,
G = facteur spécifique du bâtiment,
et
EW = pression de vapeur à saturation au-dessus de l'eau,

avec :

$$EW = 10^{-}(0,660077 + (7,5 \times RT/(237,3 + RT)))$$

et

$$EW\_RF = EW \times RF/100$$

**4.** Appareil de mesure et d'avertissement selon la revendication 3, **caractérisé en ce que** la température de l'air ambiant (RT) est corrigée par le facteur spécifique du bâtiment et/ou le point de rosée TP est corrigé par un facteur de sécurité, de préférence selon DIN 4108.

**5.** Appareil de mesure et d'avertissement selon la revendication 4, **caractérisé en ce que** le point de rosée corrigé est comparé à la température de l'air ambiant corrigée et si la température de l'air ambiant corrigée est inférieure au point de rosée, un événement critique est enregistré dans la mémoire de données (12).

**6.** Appareil de mesure et d'avertissement selon la revendication 5, **caractérisé en ce que** si un nombre prédéterminé d'événements critiques est atteint ou dépassé pendant un intervalle de temps prédéterminé, une alarme - optique et/ou sonore - est générée.

**7.** Appareil de mesure et d'avertissement selon l'une des revendications précédentes, **caractérisé en ce que** le dispositif d'affichage peut afficher, outre l'indication d'alarme, les respectives valeurs de mesure absolues mesurées, en particulier la température de l'air ambiant et/ou l'humidité de l'air ambiant, éventuellement avec possibilité de passage de l'une à l'autre.

**8.** Appareil de mesure et d'avertissement selon la revendication 7, **caractérisé en ce que** l'indication d'alarme du dispositif d'affichage est de préférence échelonnée en états d'alarme différenciables au moyen d'au moins trois DEL (4) de couleur différente, de préférence selon un schéma de feux tricolores.

**9.** Appareil de mesure et d'avertissement selon la revendication 8, **caractérisé en ce qu'** en outre un générateur de signaux sonores (5) qui peut être activé automatiquement dans certains états d'alarme définis est associé au dispositif d'affichage.

**10.** Appareil de mesure et d'avertissement selon la revendication 9, **caractérisé en ce que** des états d'alarme définis sont conçus de telle façon qu'ils doivent être acquittés de préférence par actionnement d'un bouton d'acquittement (7) de l'appareil de mesure et d'avertissement (1) et que l'arrêt automatique du signal sonore n'est possible qu'après cet acquittement.

**11.** Appareil de mesure et d'avertissement selon l'une des revendications précédentes, **caractérisé en ce qu'**une horloge système est intégrée dans l'appareil de mesure et d'avertissement (1), en particulier dans l'unité de processeur (11), et le générateur de signaux sonores ne peut être activé que dans des créneaux de temps définis, de préférence des créneaux de temps diurne, l'émission du signal sonore pouvant éventuellement avoir lieu avec un décalage dans le temps.

12. Appareil de mesure et d'avertissement selon l'une des revendications précédentes, **caractérisé en ce qu'** une fonction temporelle est associé au traitement des signaux de l'appareil de mesure et d'avertissement (1) de telle façon que les temps critiques, de préférence les périodes de condensation, puissent être différenciés des temps non critiques, de préférence les périodes d'évaporation, et que ces créneaux de temps soient pris en compte dans le cadre du traitement des signaux pour intensifier ou inhiber l'alarme.

13. Appareil de mesure et d'avertissement selon la revendication 12, **caractérisé en ce qu'**une courbe caractéristique des lois biologiques de croissance des moisissures est en outre enregistrée dans la mémoire de données (12) et cette courbe caractéristique est prise en compte pour la classification du temps critique ou non critique.

14. Appareil de mesure et d'avertissement selon la revendication 12 ou 13, **caractérisé en ce qu'** une fonction de calendrier est associée à l'unité de processeur (11), de façon à distinguer un fonctionnement en mode été et en mode hiver de l'appareil de mesure et d'avertissement (1) pour les valeurs de mesure absolues captées au moyen du système de capteurs.

15. Appareil de mesure et d'avertissement selon l'une des revendications précédentes, **caractérisé en ce que** le système de capteurs est muni de capteurs combinés d'humidité et de température.

16. Appareil de mesure et d'avertissement selon l'une des revendications précédentes, **caractérisé en ce que** le système de capteurs interne à l'appareil comprend une membrane hydrophobe (14) qui est disposée dans le course de circulation de l'air ambiant parcourant l'appareil de mesure et d'avertissement (1), le boîtier (2) de l'appareil de mesure et d'avertissement (1), de préférence un boîtier en plastique sans risque d'interférences électromagnétiques, possédant à cette fin des fentes d'aération (10) adéquates, un ou plusieurs capteurs CMOS (13) étant de préférence associés à la membrane hydrophobe (14) du système de capteurs interne à l'appareil pour la détection simultanée de la température ambiante et de l'humidité ambiante.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• DE 3300389 A1